# EUROPÄISCHE PATENTSCHRIFT

(11) **EP 0 887 572 B1**
(45) Veröffentlichungstag und Bekanntmachung des Hinweises auf die Patenterteilung: **17.07.2002**
(21) Anmeldenummer: 98108972.5
(22) Anmeldetag: 16.05.1998
(51) Int. Cl.: F16D 69/02, C04B 35/80, C04B 35/83

(54) **Bremseinheit aus Bremsscheibe und Bremsbelag**
Friction element consisting of brake disc and lining
Elément de friction consistant en disque et garniture de frein

(30) Priorität: 28.06.1997 DE 19727586
(43) Veröffentlichungstag der Anmeldung: 30.12.1998
(73) Patentinhaber: DaimlerChrysler AG, 70567 Stuttgart (DE)
(72) Erfinder: Dietrich, Gerd, 88483 Burgrieden (DE); Gross, Gerhard, 73560 Böbingen (DE); Haug, Tilmann, Dr., 88690 Uhldingen-Mühlhof (DE); Rebstock, Kolja, 89073 Ulm (DE)

(56) Entgegenhaltungen:
- EP-A- 0 300 756
- EP-A- 0 835 853
- DE-A- 4 438 456
- DE-C- 4 438 455

## Beschreibung

Die Erfindung betrifft eine Bremseinheit umfassend eine Bremsscheibe aus faserverstärkter C/SiC-Verbundkeramik, welcher aus einem C/C-Vorkörper herstellbar ist und einen mit ihr tribologisch zusammenarbeitenden Bremsbelag.

Gattungsgemäße Bremsscheiben sind z.B. aus der DE 44 38 455 bekannt. Eine weitere faserverstärkte Verbundkeramik ist in der vorveröffentlichten Patentanmeldung 197 11 829.1 beschrieben.

Dieses Material ist hochtemperaturbeständig und damit thermisch sehr hoch belastbar. Deswegen stellt es ein Problem dar, einen geeigneten Bremsbelag zu finden, der ebenfalls thermisch belastbar und ausreichend verschleißbeständig ist. Wegen der im Kontaktbereich zum Bremsbelag auftretenden hohen Temperaturen ist der Einsatz konventioneller Bremsbeläge mit organischem Bindersystem oder konventioneller anorganisch gebundener Bremsbeläge mit besonderen Schwierigkeiten verbunden.

Die DE 44 38 456 A1 beschreibt eine C/SiC-Bremsscheibe die aus mehreren Komponenten aufgebaut ist. Diese sind ein Kernkörper vorzugsweise aus einem C/C-Material und mindestens einem Reibkörper aus C/SiC-Material. Kernkörper und Reibkörper sind durch eine hochtemperaturbeständige Verbindungsschicht verbunden. Die EP 300 756 A1 beschreibt eine C/C-Bremsscheibe mit einer, bevorzugt zu SiC keramisierten Oberfläche als Reibfläche.

Die am 15.04.1998 veröffentlichte europäische Anmeldung EP-A-0835853 hat als Anmeldedatum 14.10.1996. Ihr Inhalt in der ursprünglich eingereichten Fassung gilt daher gemäß Artikel 54(3) und (4) EPÜ als Stand der Technik, der bei der Prüfung auf Neuheit zu berücksichtigen ist. Diese ältere Anmeldung zeigt aber nicht die Merkmale des Kennzeichen des Anspruchs 1. Ansprüche 2-5 hängen von Anspruch 1 ab. Daher steht diese Anmeldung dem Gegenstand der Ansprüche nicht neuheitsschädlich entgegen.

Aufgabe der Erfindung ist es daher, eine Bremseinheit der oben genannten Art bereitzustellen, die eine ausreichende Standzeit bei akzeptablem Bremsverhalten aufweist.

Die Lösung besteht darin, dass der Bremsbelag aus faserverstärkter C/SiC-Verbundkeramik besteht und aus einem C/C-Vorkörper herstellbar ist, dessen Dichte vor der Silizierung zumindest im oberflächennahen Bereich höher ist als die Dichte des C/C-Vorkörpers der Bremsscheibe.

Bei dem Material des Bremsbelages handelt es sich also grundsätzlich um dasselbe Material, aus dem die Bremsscheibe besteht. Die Herstellung ist z.B. aus der DE 197 11 829.1 dem Fachmann bekannt. Zunächst werden Kohlefasern mit einem Kohlenstoff-Precursor, z.B. pyrolysierbaren Kunststoffen und ggf. Zuschlagstoffen gemischt und zu einem Vorkörper, dem sog. "Grünling" verpresst. Der Grünling wird einer Pyrolyse unterzogen, wobei sich die Kunststoffe in Pyrolyse-Kohlenstoff umwandelt. Daraus resultiert ein poröser C/C-Vorkörper. Der C/C-Vorkörper wird schließlich mit flüssigem Silizium infiltriert und hitzebehandelt. Daraus resultiert ein keramisches, kohlefaserverstärkter C/SiC-Körper.

Je größer und/oder zahlreicher die Poren sind, desto geringer ist die Dichte dieses Vorkörpers. Umgekehrt ist seine Dichte umso größer, je kleiner die Poren sind und/oder je geringer ihre Anzahl ist. Folglich ist im C/SiC-Körper der Anteil an Silizium bzw. Siliziumcarbid umso größer, je poröser der C/C-Vorkörper war, d.h. je geringer seine Dichte war. Der Siliziumanteil und seine Verteilung können also über die Dichte des C/C-Vorkörpers beeinflusst und gesteuert werden.

Demnach ist die C/SiC-Bremsscheibe mit einem artgleichen, jedoch weniger harten Bremsbelag gepaart. Die geringere Härte ist auf den niedrigeren Silizium- bzw. Siliziumcarbidanteil zurückzuführen, der geringer ist als in der Bremsscheibe. Demnach ist der Keramikanteil geringer und der Kohlenstoffanteil höher. Der Bremsbelag ist also weicher als die Bremsscheibe. Er zeigt in überraschender Weise wesentlich höhere Standzeiten bzw. geringere Verschleißraten als ein artgleicher und annähernd gleichharter Belag.

Die geringere Härte des Belages wird also durch eine höhere Dichte des C/C-Vorkörpers erreicht. Diese wiederum wird durch ein geringeres Porenvolumen des mit flüssigem Silizium zu infiltrierenden C/C-Vorkörpers erzeugt. Der Siliziumcarbid-Anteil im keramisierten Bremsbelag ist dank des geringen offenen Porenanteils relativ klein und fein verteilt und der Kohlenstoffanteil ist relativ hoch. Geringe Porosität bedeutet weniger und feinere Porenkanäle, in die das Silizium eindringen kann.

Die resultierende Keramik zeigt ein Verhalten, das dem des C/C-Werkstoffes ähnlich ist, d.h. sie ist weicher als Keramik. Der Kohlenstoff begründet die gegenüber vollkeramischen Siliziumcarbidkörpern vergleichsweise geringere Härte und mechanische Anpassungsfähigkeit des Bremsbelages an die Mikro-Form der Unregelmäßigkeiten der Bremsscheibenoberfläche. Der verbleibende Siliziumcarbidgehalt bewirkt eine höhere Verschleißbeständigkeit und thermische Belastbarkeit des Bremsbelages.

Im Gegensatz dazu ist bei den Bremsscheiben ein C/C-Vorkörper mit im vergleich zu dem Vorkörper der Bremsscheibe geringerer Dichte und höherer Porosität vorgesehen. Das flüssige Silizium kann durch viele kleine Poren eindringen, so dass der Siliziumanteil letztendlich hoch ist und die resultierende Keramik eine vergleichsweise hohe Dichte aufweist.

Der Bremsbelag besteht also aus faserverstärkter Keramik mit gezielt auf die Bremsscheibe eingestelltem, tribologisch optimiertem Verhalten. Sie zeigt geringen Verschleiss, hohe Standzeiten, hohe Schadenstoleranz und vor allem einen überraschend hohen Reibbeiwert. Der hohe Reibbeiwert bewirkt, dass der bei einem Bremsmanöver auszuübende Druck verringert werden kann. Dadurch wird der Verschleiss nochmals herabgesetzt. Außerdem ist es möglich, die Bremskraftverstärker geringer zu dimensionieren. Dies führt zu einer Gewichtsersparnis, die wiederum den Kraftstoffverbrauch senken kann.

Besonders vorteilhaft ist es, ein mikroskopisch homogenes Werkstoffgefüge mit gleichmäßigen Eigenschaften zu erreichen.

Die erfindungsgemäße Bremseinheit kann in ihren Eigenschaften an die jeweils gestellten Anforderungen individuell angepasst werden. Zeigt sich z.B., dass die C/SiC-Bremsscheibe für eine spezielle Anwendung einen zu hohen Verschleiß aufweist, kann man den Anteil an Siliziumcarbid in der Scheibe senken. Umgekehrt sollte im zugehörigen Belag der Siliziumcarbidanteil gesteigert werden, um ein optimales Bremsverhalten, eine hohe Standzeit und einen geringen Verschleiß zu gewährleisten. Die Härte der Bremsscheibe und die Härte des Bremsbelages können also optimal aufeinander eingestellt werden, damit die gesamte Bremseinheit eine hohe Standzeit bei geringem Verschleiß aufweist. Optimal heißt z.B., dass die Bremsscheibe einen kaum messbaren Verschleiss aufweist und die Bremseläge ein Verschleißverhalten zeigen, dass demjenigen konventioneller Bremsbeläge vergleichbar ist.

In vorteilhafter Weise ist die Porosität des C/C-Vorkörpers des Bremsbelages zumindestens im oberflächennahen Bereich etwa 20 bis 30 % geringer als die Porosität des C/C-Vorkörpers der Bremsscheibe. Ein bevorzugter Wert für die Dichte des Vorkörpers des Bremsbelages im oberflächennahen Bereich beträgt etwa 1,2 - 1,5 g/cm³, bevorzugt 1,3 g/cm³.

Vorteilhafterweise bestehen der Bremsbelag und/oder die Bremsscheibe aus einem Material, dessen Fasern im Wesentlichen isotrop orientiert sind. Dadurch wird eine gleichmäßig hohe Wärmeleitfähigkeit quer zur Bremsfläche der Bremsscheibe bzw. des Bremsbelages erzielt. Damit geht eine Absenkung der Oberflächentemperatur im Belastungsfalle einher. Zu hohe Oberflächentemperaturen können zu einer übermäßigen Erhitzung der Bremsflüssigkeit führen.

Da bei einem Bremsmanöver mit Keramik-Bremsscheiben und Keramik-Bremsbelägen störende Geräusche auftreten können, ist es von Vorteil, wenn sog. Komfortstabilisatoren wie Cu, Ca F₂, Mo S₂, SbS₃ enthalten sind.

Bezüglich des erfindungsgemäßen Verfahrens ist vorgesehen, dass zur Herstellung eines Bremsbelages aus faserverstärkter C-SiC-Keramik ein Kohlenstoff-Faserkörper mit einem bestimmten Poren- und/oder Kapillarvolumen hergestellt, dieser mit Kohlenstoff und/oder einem Kohlenstoff-Precursor infiltriert und durch Pyrolyse ein poröser C/C-Vorkörper erzeugt wird, welcher wiederum mit flüssigem Silizium infiltriert wird, wobei der Kohlenstoff zumindestens im oberflächennahen Bereich der Poren und Kapillaren zu Siliziumcarbid keramisiert wird. Das offene Poren- und Kapillarvolumen des C/C-Vorkörpers vor der Flüssigsilizierung sollte auf max. etwa 60 Vol.-%, vorzugsweise etwa 40 bis 50 Vol.-% eingestellt werden.

Die Einstellung wird im Wesentlichen durch die Temperatur beim Verpressen des Grünlings, den angewandten Pressdruck und die eingesetzten Rohstoffe beeinflusst. Je höher der Pressdruck ist, desto höher ist die Dichte des resultierenden Grünlings, desto geringer die Porosität des C/C-Vorkörpers und desto weicher der resultierende Keramikkörper. Eine andere Möglichkeit zur Einstellung des Kapillarvolumens besteht darin, den Kohlenstoff-Precursor mittels Zwangsinfiltration (engl.: RTM = Resin Transfer Molding) einzubringen, d.h. ihn mit einem bestimmten Druck zu beaufschlagen und in den Faserkörper einzubringen und gleichzeitig die Poren und Kapillaren des Kohlefaserkörpers zu evakuieren. Je nach Einstellung des Drucks bzw. des Vakuums erreicht man eine vorbestimmte Kapillarengröße. Der so erhältliche Grünling wird anschließend pyrolysiert.

Wählt man keinen flüssigen Kohlenstoff-Precursor, sondern ein festes Bindemittel, kann die Einstellung durch die Art der Vermischung der Komponenten beim Herstellen des zu verpressenden Homogenisats erfolgen. Insbesondere kann ein Pulver oder eine Paste aus Kohlenstoffpartikeln in die Poren bzw. Kapillaren eingerakelt werden. Damit werden nur oberflächennahe Bereiche in Pyrolyse-Kohlenstoff umgewandelt und im nächsten Verfahrensschritt siliziert. Die unbehandelten Oberflächenbereiche und das Innere verbleiben als C/C-Körper.

Als Kohlenstoff-Precursor sind nicht nur Kohlenstoffpulver, Suspensionen oder Paste von Kohlenstoffpulvern, Graphit oder Pech geeignet, sondern auch pyrolysierbare Polymere wie Vinylharze oder auch siliziumhaltige Polymere, z.B. aus der Gruppe der Polysilane, der Polycarbosilane, der Polyborosilazane, der Polysilazane, der Polycarbosilazane und der Polyborocarbosilizane.

Im Folgenden wird ein Ausführungsbeispiel der Erfindung anhand der beigefügten Ausführungsbeispiele näher beschrieben. Es zeigen:
- Figur 1: ein lichtmikroskopisches Gefügebild einer Bremsscheibe einer erfindungsgemäßen Bremseinheit;
- Figur 2: ein lichtmikroskopisches Gefügebild eines Bremsbelages mit hohem C/C-Gehalt und geringem SiC-Gehalt;
- Figuren 3a, b: Schliffe in verschiedene Richtungen eines belagtechnisch optimierten C/C-Werkstoffes vor der Silizierung, und zwar in Pressrichtung (Figur 3a) und senkrecht zur Pressrichtung (Figur 3b);
- Figur 4: Ergebnisse von Bremsversuchen mit einer erfindungsgemäßen Bremseinheit;
- Figur 5: Ergebnisse von Bremsversuchen mit einer C-SiC-Bremsscheibe und einen Bremsbelag aus demselben Material;
- Figur 6: Ergebnisse von Bremsversuchen mit einer C-SiC-Bremsscheibe und einem CIC-Bremsbelag.

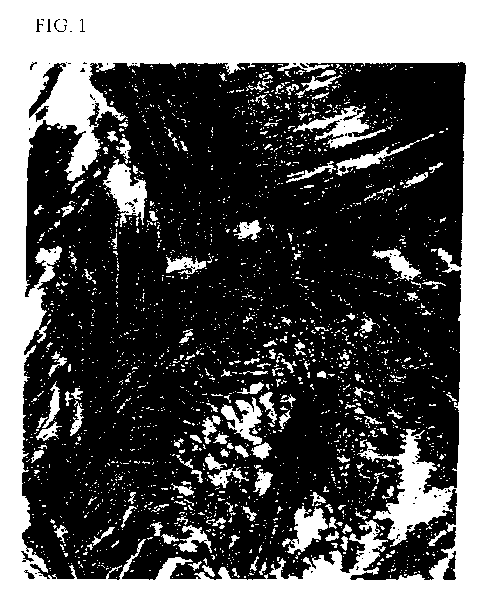

Figur 1 zeigt das Gefügebild einer Bremsscheibe aus ca. 35-45 Vol.-% Fasern, ca. 40-50 Vol.-% SiC und max. ca. 15 Vol.-% Silizium. Das Gefüge ist homogen; die Fasern sind isotrop angeordnet. Die Dichte beträgt ca. 2,25 g/cm³.

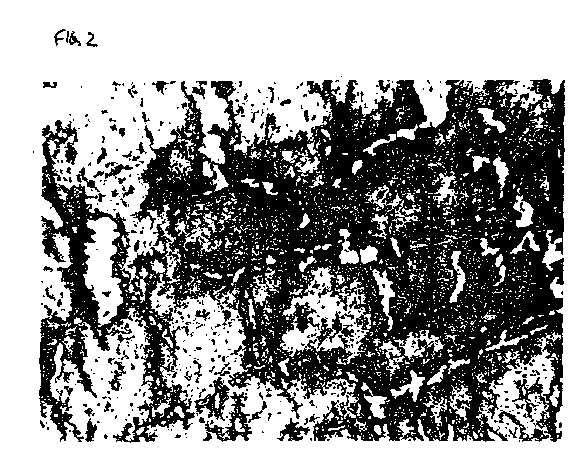

Figur 2 zeigt einen C-SiC-Bremsbelag mit niedrigem SiC-Gehalt. Die Dichte beträgt ca. 2,15 g/cm³. Zur Herstellung wurde ein Grünling aus Kohlefasern, Kohlenstoff-Precursor und Zuschlagsstoffen bei Drücken über 100 bar verpresst.

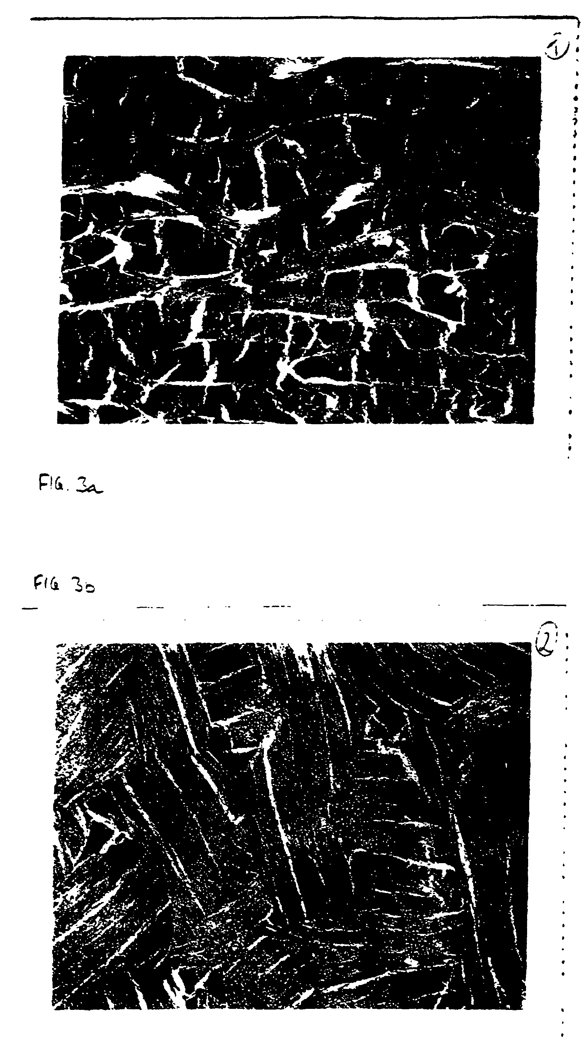

Ein weiterer optimierter Bremsbelag ist in den Figuren 3a und 3b dargestellt. Man erkennt in Figur 3a sehr schön die relativ kleinen Kanäle, durch die nur wenig Silizium eingedrungen ist. Die Faserstruktur ist erhalten geblieben; der C-Anteil ist hoch. In Figur 3b sieht man, dass die Fasern im Wesentlichen isotrop verteilt sind. Die Dichte des Materials beträgt ca. 2,15 g/cm³. Der Druck beim Pressen betrug ca. 100 - 200 bar. Dabei werden die Porenkanäle relativ eng zusammengedrückt.

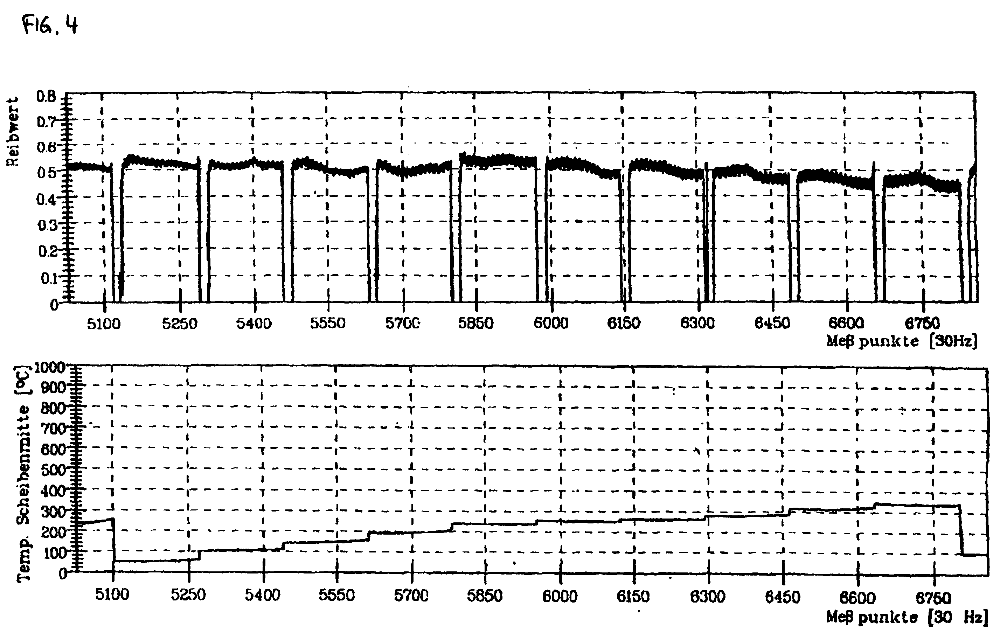

Die Figuren 4 bis 6 zeigen Prüfstandsmessungen mit verschiedenen Materialkombinationen von Bremsscheibe und Bremsbelag. Die Figur 4 zeigt die Ergebnisse mit dem in den Figuren 3a und 3b gezeigten Belag. Bei allen Messungen wurde eine Bremsscheibe gemäß Figur 1 mit einem Durchmesser von 285 mm verwendet. Die Beläge maßen 80 x 65 mm und waren in metallische Halterungen thermisch eingeschrumpft. Die angelegten Drücke betrugen 10-30 bar, punktuell bis 50 bar. Die Geschwindigkeiten lagen bei 60-200 km/h. Bei der erfindungsgemäßen Bremseinheit lag der gemessene Reibbeiwert über 0,5. Die Temperatur in der Scheibenmitte betrug unter 400°C. Die Messwerte zeigten sehr gute Konstanz als Funktion der angelegten Drücke und Geschwindigkeiten. Auch die Temperaturkonstanz war sehr gut. Ein Fading konnte nicht beobachtet werden. Der gemessene Gesamtverschleiss nach Abschluss des vollständigen Messprogramms betrug bei der Bremsscheibe 0,05 mm und beim Bremsbelag 1 g.

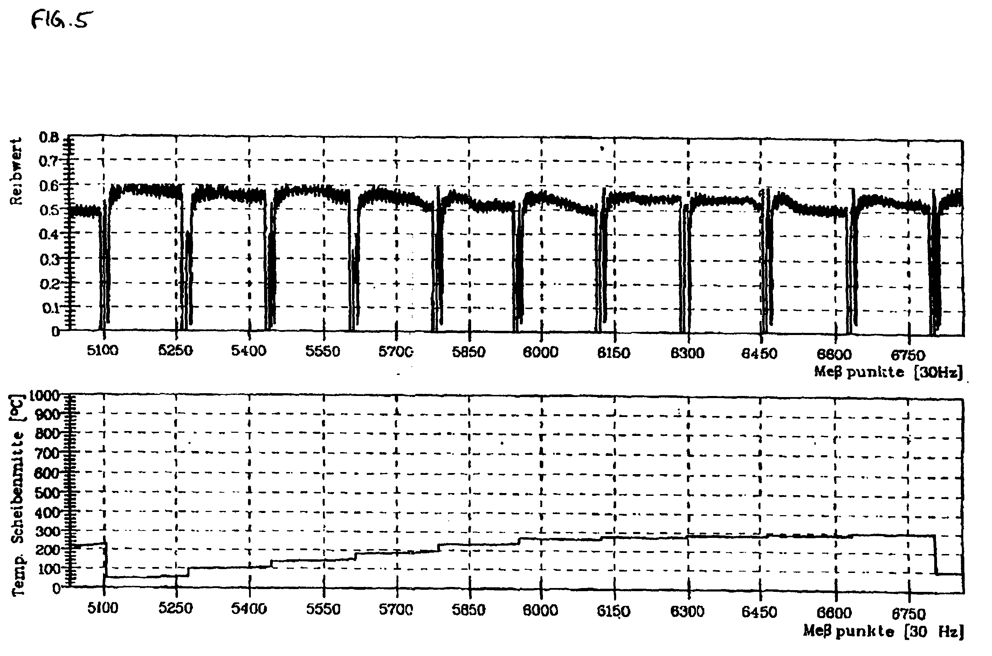

Die Figur 5 zeigt dieselbe Messung mit einer C/SiC-Bremsscheibe und einem C/SiC-Bremsbelag. Der Reibbeiwert lag bei sehr guten 0,6, die Temperatur in der Scheibenmitte stieg nicht über 300° C. Die Verschleissdaten waren jedoch unbefriedigend. Der Verschleiss betrug bei der Bremsscheibe 0,25 mm, beim Bremsbelag 1,0 g. Der harte und spröde Bremsbelag bewirkt einen messbaren Abrieb an der Bremsscheibe. Damit geht ein erheblicher Materialverlust beim Bremsbelag selbst einher.

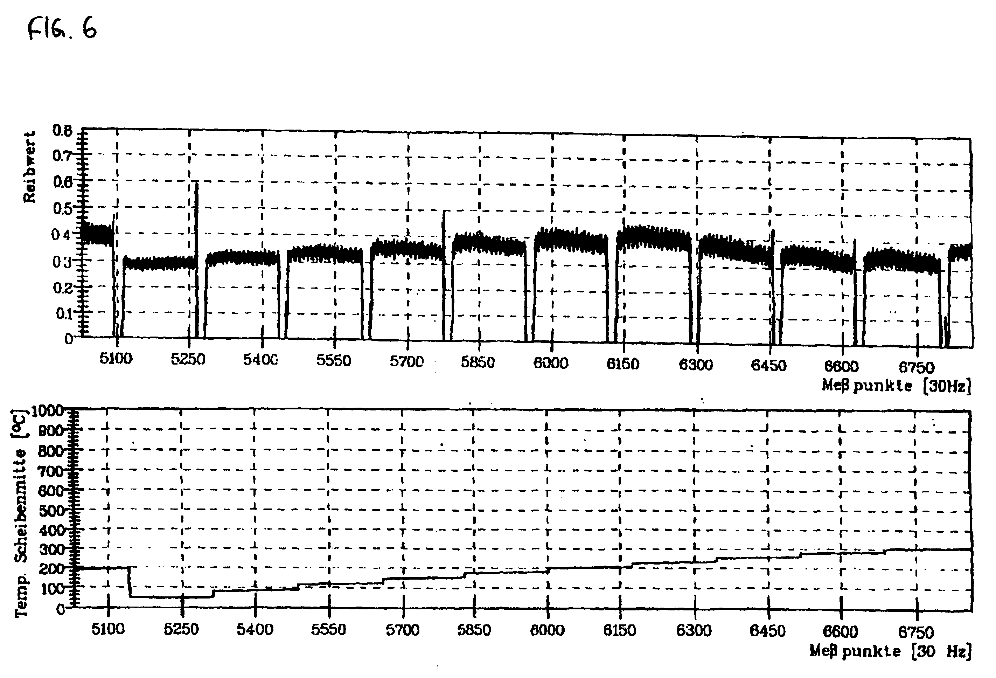

Die Figur 6 zeigt eine weitere Vergleichsmessung mit einer C/SiC-Bremsscheibe und einem C/C-Bremsbelag. Hier war der Reibbeiwert deutlich schlechter. Die Bremsscheibe zeigte keinen messbaren Verschleiss. Der Materialverlust beim Bremsbelag betrug 2,5 g. In diesem Fall ist der Bremsbelag zu weich, um auf Dauer der Einwirkung durch die harte und spröde Bremsscheibe standzuhalten.

## Patentansprüche

1. Bremseinheit umfassend eine Bremsscheibe aus faserverstärkter C/SiC-Verbundkeramik, welche aus einem C/C-Vorkörper herstellbar ist, und einem mit ihr tribologisch zusammenarbeitenden Bremsbelag, **dadurch gekennzeichnet, dass** der Bremsbelag aus faserverstärkter C/SiC-Verbundkeramik besteht und aus einem C/C-Vorkörper herstellbar ist, dessen Dichte vor der Silizierung zumindest im oberflächennahen Bereich höher ist als die Dichte des C/C-Vorkörpers der Bremsscheibe.

2. Bremseinheit nach Anspruch 1, **dadurch gekennzeichnet, dass** die Porosität des C/C-Vorkörpers für den Bremsbelag zumindest im oberflächennahen Bereich etwa 20 bis 30 % geringer ist als die der Bremsscheibe.

3. Bremseinheit nach Anspruch 1 oder 2, **dadurch gekennzeichnet, dass** die Dichte des C/C-Vorkörpers für den Bremsbelag zumindest im oberflächennahmen Bereich etwa 1,2 bis 1,5 g/cm³, bevorzugt etwa 1,3 g/cm³ beträgt.

4. Bremseinheit nach einem der vorhergehenden Ansprüche, **dadurch gekennzeichnet, dass** die Bremsscheibe und/oder der Bremsbelag aus einer faserverstärkten C/SiC-Verbundkeramik bestehen, deren Fasern im Wesentlichen isotrop orientiert sind.

5. Bremseinheit nach einem der vorhergehenden Ansprüche, **dadurch gekennzeichnet, dass** der zur Herstellung der Bremsscheibe und/oder des Bremsbelages verwendete Grünkörper ein mikroskopisch homogenes Werkstoffgefüge aufweist und/oder feinverteilte, kleine Poren und Kanäle aufweist.

## Claims

1. Brake unit comprising a brake disc of fibre-reinforced C/SiC composite refractory material which may be made from a C/C preform and a brake lining tribologically co-operating therewith, **characterised in that** the brake lining consists of fibre-reinforced C/SiC composite refractory material and may be made from a C/C preform, the density of which prior to siliconization is higher than the density of the C/C preform of the brake disc, at least in the region close to the surface.

2. Brake unit as claimed in claim 1, **characterised in that** the porosity of the C/C preform for the brake lining is approximately 20 to 30% lower than that of the brake disc, at least in the region close to the surface.

3. Brake unit as claimed in claim 1 or 2, **characterised in that** the density of the C/C preform for the brake lining is approximately 1.2 to 1.5 g/cm³, preferably approximately 1.3 g/cm³, at least in the region close to the surface.

4. Brake unit as claimed in one of the preceding claims, **characterised in that** the brake disc and/or the brake lining are made from a fibre-reinforced C/SiC composite refractory material, the fibres of which are essentially isotropically oriented.

5. Brake unit as claimed in one of the preceding claims, **characterised in that** the green compact used to make the brake disc and/or the brake lining has a microscopically homogeneous material structure and/or finely distributed, small pores and passages.

## Revendications

1. Unité de frein comprenant un disque de frein formé d'une céramique composite C/SiC renforcée par des fibres, qui peut être préparée à partir d'une ébauche C/C, et d'une garniture de frein qui coopère de façon tribologique avec cette céramique, **caractérisée en ce que** la garniture de frein est constituée par une céramique composite C/SiC renforcée par des fibres et peut être préparée à partir d'une ébauche C/C, dont la densité avant le siliciage est supérieure, au moins dans la zone proche de la surface, à la densité de l'ébauche C/C du disque de frein.

2. Unité de frein selon la revendication 1, **caractérisée en ce qu'**au moins dans la zone proche de la surface la porosité de l'ébauche C/C pour la garniture de frein est inférieure d'environ 20 à 30 % à celle du disque de frein.

3. Unité de frein selon la revendication 1 ou 2, **caractérisée en ce qu'**au moins dans la zone proche de la surface la densité de l'ébauche C/C pour la garniture de frein est comprise entre environ 1,2 à 1,5 g/cm³ et de préférence est égale à environ 1,3 g/cm³.

4. Unité de frein selon l'une des revendications précédentes, **caractérisée en ce que** le disque de frein et/ou la garniture de frein sont constitués par une céramique composite C/SiC renforcée par des fibres et dont les fibres sont orientées essentiellement de façon isotrope.

5. Unité de frein selon l'une des revendications précédentes, **caractérisée en ce que** le corps à vert, utilisé pour la fabrication du disque de frein et/ou de la garniture de frein, possède une structure de matériau homogène du point de vue microscopique et/ou de petits pores et canaux, finement répartis.
